Europäisches Patentamt

**European Patent Office**

Office européen des brevets

(19)

(11) Publication number: **0 066 718**
A1

(12)

# EUROPEAN PATENT APPLICATION

(21) Application number: **82103983.1**

(22) Date of filing: **07.05.82**

(51) Int. Cl.³: **F 02 M 57/02,** F 02 M 59/10, F 02 M 39/00

(30) Priority: **18.05.81 IT 2178081**

(43) Date of publication of application: **15.12.82 Bulletin 82/50**

(84) Designated Contracting States: **AT DE FR GB SE**

(71) Applicant: **CIPA Costruzione Iniettori Pompe Accessori S.p.A., Via C.G. Puecher, 6, I-20037 Paderno Dugnano (Milano) (IT)**

(72) Inventor: **Rosastri, Carlo, Via Firenze, 4, I-20037 Paderno Dugnano Prov. of Milano (IT)**

(74) Representative: **Modiano, Guido et al, MODIANO & ASSOCIATI S.A.S. Via Meravigli, 16, I-20123 Milan (IT)**

(54) **Injector-pump for diesel engines.**

(57) The Diesel engine injector-pump comprises a body (1) having in its interior an injector (3) and a pump (4) arranged on one side of the injector (3). Which latter is associable with an engine cylinder and communicates to the pump (4) through a delivery conduit (5) formed within the body (1). The plunger (20) of the pump (4) is driven by a vertical rod (31) actuated by a camshaft (30) provided in the engine crankcase.

COMPLETE DOCUMENT

0066718

This invention relates to an injector pump for Diesel engines.

As is known, Diesel engines are equipped with a fuel injection system, which has the functions of metering and atomizing the fuel supply to promote its combustion and control the engine operation in accordance with its output requirements.

In its most traditional form, the injection system comprises an injection pump driven off the camshaft and one injector for each engine cylinder. Each injector is connected, through a metal pipe line, to a respective pump plunger, which, in performing a reciprocating and rotary movement, will meter the amount of fuel delivered for injection.

The above-described system, although widely applied, has first of all the disadvantage of involving relatively complex connections between the injection pump and injector while, inside the fuel lines, hydraulic phenomena may take place which affect the proper operation of the engine.

In order to simplify the injection system and improve on its performance, a system has long been proposed, which is called "injector pump system" and combines in a unitized component both the fuel injection pump and fuel injector functions, while operating in a quite conventional manner.

This latter device is obtained by placing the pump assembly above the injector, with the pump practically aligned with the injector. In this case, the pump plunger and all the drive linkages are actuated by means of a rocker arm similar to the rocker arm of the engine intake and exhaust valves.

However, this proposal is not devoid of some drawbacks, and notably the fact that the injector pump unit has a considerable height dimension, so that the whole construction of the engine is significantly higher than is normal, and therefore, only useful for those situations where room is no problem, such as in marine and heavy vehicle applications.

If the additional fact is considered that the size of the injector pump unit would be the same regardless of the engine size, it will be apparent that the smaller the engine the more significant becomes the space problem, thereby this proposal has not been applied in practice on a large scale to relatively small capacity engines.

A further shortcoming is that the drive or control linkages for effecting the fuel injection and metering the amount of fuel delivered are fairly complex, so that the simplified construction brought about by the injector pump is, in a sense, achieved at the expense of other engine parts whose construction becomes more complex.

Thus the task of this invention is to obviate such prior drawbacks by providing an injector pump with a novel structural configuration, whereby the injector pump unit can be made extremely compact, with a height dimension which is substantially equal to the bulk dimension of the individual injector.

Within this task it is an object of the invention to provide such an injector pump which can be installed through an extremely quick and economical procedure since it would require no special linkages but just utilize in practice conventional components without involving any particular modifications.

Another object of this invention is to provide such an injector pump which is of low cost and hence particularly useful for small capacity Diesel engines, bearing in mind that its application on small Diesel engines is highly attractive, especially if the fact is kept in mind that the injection system is the highest cost single item of the engine, which cost remains unchanged as the size of the engine varies.

The aforesaid task and object as well as yet other objects, such as will be apparent hereinafter, are achieved by an injector pump for Diesel engines, characterized in that it comprises a body having in its interior an injector and an injection pump arranged near said injector, said injector being associable with an engine cylinder and in communication with said pump through a fuel delivery conduit formed within said body, the plunger of said pump being driven through a vertical rod actuated by the engine camshaft.

0066718

Further features and advantages will be more apparent from the following description of a preferred, though not limitative, embodiment of this injector pump for Diesel engines, with reference to the accompanying illustrative drawings, where:

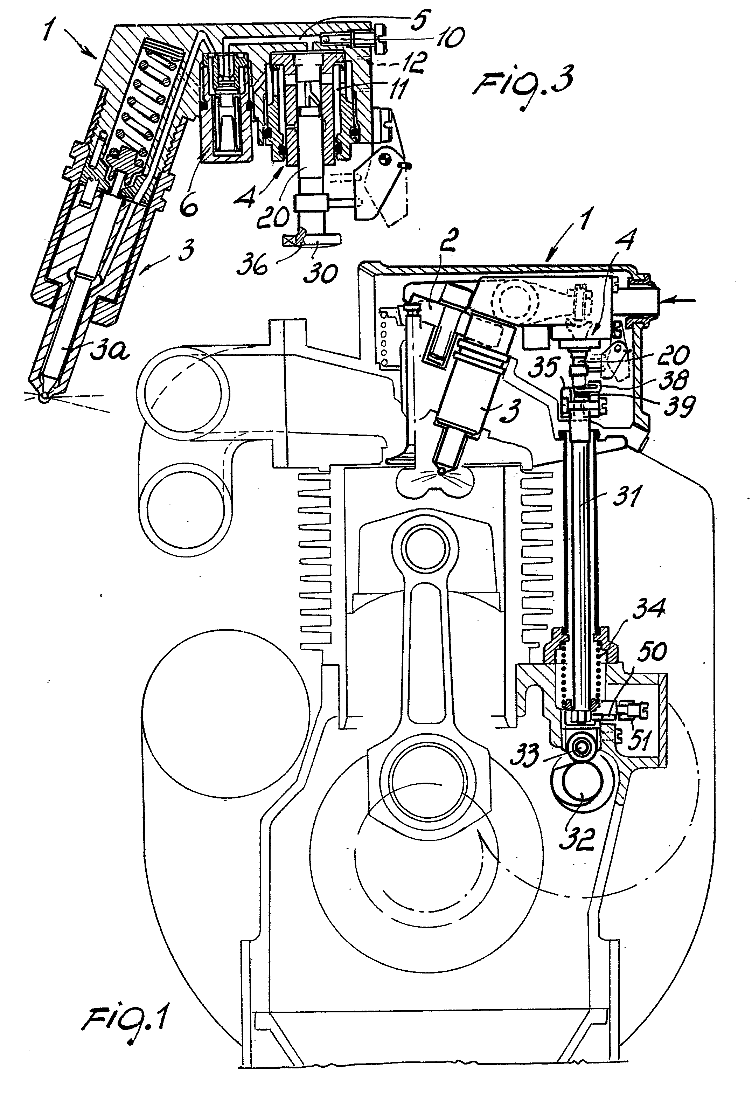

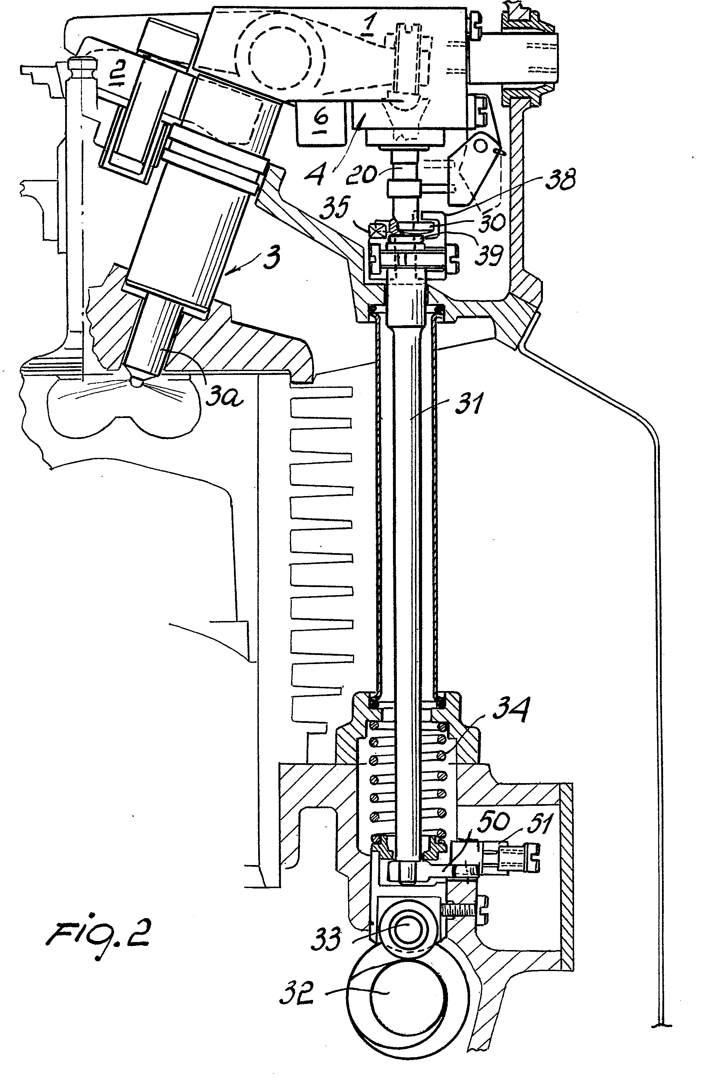

Figure 1 shows schematically a Diesel engine, in a general view thereof evidencing the injector pump according to the invention;

Figure 2 is a detail view of the injector pump; and

Figure 3 is a sectional view of the injector pump showing the component elements thereof.

Making reference to the drawing figures, the injector pump for Diesel engines according to the invention comprises a body, generally indicated at 1, which can be mounted on the engine block by means of a mounting bracket 2.

The body 1 accommodates an injector, generally indicated at 3, alongside which is an injection pump 4.

More specifically, the injector 3 is equipped with a conventional atomizer or spray nozzle, indicated at 3a, which is in communication with the pump 4 through a fuel delivery conduit 5 formed directly within the body 1.

The delivery conduit 5 includes a two-way check valve 6 which is located on the body 1, between the injector 3 and pump 4.

The delivery conduit 5 also includes a calibrating and timing valve 10 which is accommodated directly

0066718

on the body 1.

The pump 4 defines a fuel chamber 11 which communicates to a fuel inlet fitting 12, also formed directly in the body 1.

Inside the fuel chamber 11, a plunger 20 is slidable and rotatable which forms the pumping assembly which controls the intake port to the delivery conduit.

At the bottom, the plunger 20 has, on the outside of said chamber 11, a disk-like widening 30 for connecting the plunger 20 to a vertical rod 31 driving said plunger, which vertical rod is actuated through the engine camshaft 32 located, as is customary, in the engine crankcase.

The vertical rod 31 is provided at the bottom end thereof with a roller tappet 33, acted upon by a return spring 34 which holds the roller close against the camshaft.

The cited vertical rod 31, in addition to reciprocating vertically to impart a reciprocating linear motion to the plunger 20, is also enabled to rotate about its own axis to effect the adjustment of the fuel delivery flow rate. To this aim, the rod is rigidly connected with its bottom end to a lever 50 which is acted upon by a slider 51 for connection to the lever itself; by virtue of the connections just described, it becomes possible to accommodate the centrifugal governor in the engine crankcase, which considerably simplifies the mechanisms involved.

The vertical rod is made rotatively rigid with the plunger 20 through a key 35 attached to the top

- 7 -

0066718

end of the rod 31 and engaging with a notch 36 formed on the disk-like widening 30.

To make the plunger 20 and vertical rod 31 rigid for linear translation, a yoke member 38 is provided which is connected to the top end of the vertical rod and engages with the disk-like widening 30.

Another peculiar feature of the invention is that between the disk-like widening 30 and top end of the vertical rod 31, there may be interposed timing shims 39 which can be readily added and removed for injection timing purposes.

The operation of this injector pump is quite similar to that of a conventional injector or injector pump, with the added advantage that the side-by-side arrangement of the pump, injector and check valve assembly affords a lower overall height dimension of the assembly, thereby the engine construction can be made the lowest possible, since the upper pump actuation rocker arm is no longer necessary, as was instead the case with traditional injector pumps.

Moreover, the injector pump according to this invention is driven directly by the vertical rod, in turn actuated by the camshaft in the crankcase, which brings about a considerable simplification of all the interconnecting linkages.

Another important advantage is that timing can be readily adjusted by suitably shimming the plunger bottom at the disk-like widening 30.

Furthermore, by enabling the delivery rate to be simply adjusted by a rotation of the vertical rod, and consequently of the plunger, it becomes possible to accommodate the centrifugal governor within the crankcase of the engine, without providing delivery rate adjustment levers at the cylinder heads with attendant linkages, as is the case instead with the prior design injector pump mentioned in the preamble.

In conclusion, a novel construction has been provided for the engine, which additionally to solving the bulk problems inherent in particular to Diesel engines, also affords the advantage that the unit is easily controllable, and maintained, and above all of comparatively low cost.

The invention as described is susceptible to many modifications and variations without departing from the scope of the instant inventive concept.

Moreover, all of the details may be replaced with other technically equivalent elements.

In practicing the invention, the materials employed, provided they are compatible with the intended specific application, and the dimensions and contingent shapes may be any selected ones.

## CLAIMS

1. An injector pump for Diesel engines, characterized in that it comprises a body (1) having in its interior an injector (3)    and an injection pump (4) arranged near said injector (3), said injector (3) being associable with an engine cylinder and in communication with said pump (4) through a fuel delivery conduit (5), the plunger (20) of said pump (4) being driven through a vertical rod (31) actuated by the engine camshaft (32).

2. An injector pump for Diesel engines according to Claim 1, characterized in that said delivery conduit (5) incorporates a check valve (6) arranged on said body (1).

3. An injector pump for Diesel engines according to either of the preceding claims, characterized in that it comprises on said delivery conduit (5) a calibrating and timing valve (10) directly accommodated in said body (1).

4. An injector pump for Diesel engines according to one or more of the preceding claims, characterized in that said pump (4) comprises a chamber (11) in communication with a fuel inlet fitting (12) formed directly in said body (1).

5. An injector pump for Diesel engines according to one or more of the preceding claims, characterized in that said vertical rod (31) is movable linearly along and rotatably about its own axis, said plunger (20) being rotatively and linearly rigid with said vertical rod (31).

6. An injector pump for Diesel engines according to one or more of the preceding claims, characterized in that said plunger (20) has, on the outside of said fuel chamber (11), a disk-like widening (30) formed with a notch (36) wherein a key (35) is arranged to engage, said key (35) being secured to the top end of said vertical rod (31) to make said plunger (20) and said vertical rod (31) rotatively rigid together.

7. An injector pump for Diesel engines, according to one or more of the preceding claims, characterized in that it comprises a yoke member (38) associated with the top end of said vertical rod (31) and engaging with said disk-like widening (30) to make said plunger (20) and said vertical rod (31) rigid together for common linear motion.

8. An injector pump for Diesel engines, according to one or more of the preceding claims, characterized in that between said disk-like widening (30) and the top end of said vertical rod (31) there are interposed timing shims (39).

9. An injector pump for Diesel engines according to one or more of the preceding claims, characterized in that said vertical rod (31) has, at the bottom end thereof, a lever (50) associated with a slider (51) located on the engine crankcase for adjusting the fuel delivery rate, the centrifugal governor being accommodated on the engine crankcase.

10. An injector pump for Diesel engines, substantially as herein described and illustrated.

0066718

Fig.3

Fig.1

Fig.2

0066718

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| Y | US-A-2 682 228 (BUUREN)<br>* Column 3, lines 3-70; figure 1 * | 1 | F 02 M 57/02<br>F 02 M 59/10<br>F 02 M 39/00 |
| Y | DE-C- 653 555 (SAURER)<br>* Page 2, line 2 - page 3, line 13; figures 1-3 * | 1 | |
| P,A | DE-A-2 948 407 (BELLMANN)<br>* Page 5, line 14 - page 7, line 19; figure 1 * | 1 | |
| A | DE-B-1 258 186 (BENDIX)<br>* Column 3, line 23 - column 5, line 14; figures 1-5 * | 1,5 | |

TECHNICAL FIELDS
SEARCHED (Int. Cl. 3)

F 02 M

The present search report has been drawn up for all claims

| Place of search<br>THE HAGUE | Date of completion of the search<br>13-08-1982 | Examiner<br>SCHMID R. |
|---|---|---|